# EUROPEAN PATENT APPLICATION

(11) **EP 2 701 456 A1**
(43) Date of publication of application: **26.02.2014**
(21) Application number: 12848964.8
(22) Date of filing: 18.01.2012
(51) Int. Cl.: H04W 88/06

(54) **WIRELESS BROADBAND DATA CARD SUPPORTING ACCESSING NETWORK IN 3G AND WI-FI MANNERS**

(30) Priority: 18.11.2011 CN 201110367672
(71) Applicant: ZTE Corporation, Shenzhen, Guangdong 518057 (CN)
(72) Inventor: WANG, Wentao, Shenzhen Guangdong 518057 (CN); LI, Xingyuan, Shenzhen Guangdong 518057 (CN); WANG, Chuanhui, Shenzhen Guangdong 518057 (CN)
(74) Representative: Novagraaf Technologies
(86) International application number: PCT/CN2012/070516
(87) International publication number: WO 2013/071709

(57) **Abstract**

The present document discloses a wireless broadband data card which supports accessing a network in 3G and Wi-Fi modes. The wireless broadband data card is connected to a terminal through a USB interface, including: a USB device controller, a USB device driving module, an IP packet and Ethernet frame conversion module, a 3G access module, a dynamic host configuration protocol (DHCP) server activation module, and a Wi-Fi access module. By adopting the present document, the 3G access function and the Wi-Fi access function are integrated in one data card; on the one hand, the data card is convenient to carry and easy to use, and has a low cost; on the other hand, a uniform NDIS driver is used as a uniform data transmission channel and medium, thereby greatly reducing the software development cost and maintenance cost.

## Description

### Technical Field

The present document relates to the mobile data communication field, and in particular, to a wireless broadband data card which supports accessing a network in 3rd generation mobile communication technology (3G) and wireless fidelity (Wi-Fi) modes.

### Background of the Related Art

With the acceleration of the 3G network construction, the use of the 3G wireless broadband service gets more and more popular. Besides the conventional 3G wireless wide area communication network, in order to facilitate the users to perform the data service whenever and wherever possible further, all the operators, including China Mobile, China Telecom and China Unicom, speed up the building of the Wi-Fi hotspot, and the coverage area becomes bigger and bigger, which provides a new selection for the 3G wireless access. Therefore, the 3G wireless broadband service includes two implementation ways: one is through the 3G mobile network which needs to perform the dial-up access through a 3G cell phone or a data card with a corresponding function; another is through the wireless hotspot built by the operator which can access the wireless network after performing the access authentication through a cell phone or a data card with a Wi-Fi function.

Correspondingly, there are two kinds of wireless broadband data cards at the market at present; one is a wireless network card, and another is a wireless card only supporting the Wi-Fi function. The wireless network card is a networking medium applied extensively in the wireless wide area communication network at present, and supports the 3G or the 2G + 3G dual mode data connection. The structure of such a data card is simple, but it only has single function and the data service can only be performed through the 3G wireless network. The wireless card is a device of a terminal wireless network, and is a wireless terminal device used for connecting to the internet through a wireless connection network within the wireless coverage of the wireless local area network. Such a wireless data card has a low cost, and is simple in structure and easy to use, but it cannot access the wireless wide area communication network through dial-up access.

### Summary of the Invention

The objective of the present document is to provide a wireless broadband data card which supports accessing a network in 3G and Wi-Fi modes, to enable switching between the two access modes freely.

In order to solve the above-mentioned problem, the following technical scheme is adopted:
a wireless broadband data card supporting accessing a network in 3G and Wi-Fi modes is provided, wherein, the wireless broadband data card is connected to a terminal through a USB interface, and the wireless broadband data card comprises: a USB device controller, a USB device driving module, an IP packet and Ethernet frame conversion module, a 3G access module, a dynamic host configuration protocol (DHCP) server (DHCP server module), and a Wi-Fi access module, wherein:
the USB device controller is configured to: perform data transmission with a terminal connected with a present data card;
the USB device driving module is configured to: enumerate a network driver interface specification (NDIS) device and more than one virtual serial port on a PC side through the USB interface by the data card ; and activate the DHCP server module after accessing a 3G data network or a Wi-Fi connection successfully; and send uplink Ethernet frames sent by the USB device controller correspondingly to the IP packet and Ethernet frame conversion module or the Wi-Fi access module according to a connection mode selected by a user and sent by the USB device controller; and send downlink Ethernet frames sent by the IP packet and Ethernet frame conversion module or the Wi-Fi access module to the USB device controller;
the IP packet and Ethernet frame conversion module is configured to: parse out IP data packets from received uplink Ethernet frames sent by the USB device driving module to send to the 3G access module; and encapsulate received IP data packets sent by the 3G access module as Ethernet frames to send to the USB device driving module;
the 3G access module is configured to: send the IP data packets sent by the IP packet and Ethernet frame conversion module out according to a 3G protocol, and process data packets received from a network side to send to the IP packet and Ethernet frame conversion module;
the DHCP Server module is configured to: assign an IP address for the terminal after activation; and
the Wi-Fi access module is configured to: perform medium access control (MAC) conversion and transmission of the data packets between the network side and the USB device driving module.
Wherein: the IP address assigned for the PC by the DHCP Server module comes from an address obtained from the network side after a packet data protocol (PDP) is activated.
Wherein: a user command received by the USB device controller is transmitted in an Attention (AT) way.

The wireless broadband data card further comprises an authorization module, wherein: the authentication module is configured to: store user authorization result information, a user name and a password, and finish an access authorization automatically according to user configuration.

The wireless broadband data card further comprises a subscriber identity module (SIM) card driving module, wherein:
the subscriber identity module (SIM) card driving module is configured to: provide reading of SIM information.
Wherein: the Wi-Fi access module comprises an Ethernet bridge unit, wherein:
the Ethernet bridge unit is configured to: connect the Wi-Fi network and the present data card to be an identical network in a MAC layer.

An access switching method comprises: establishing a 3G data connection or a WiFi access firstly when the data card described in any one of claims 1-6 establishes a connection, and then establishing a network driver interface specification (NDIS) connection; when disconnecting, disconnecting the NDIS connection firstly, and then disconnecting the 3G data connection or the WiFi access.

By adopting the above-mentioned technical scheme, the 3G access function and the Wi-Fi access function are integrated in one data card; on the one hand, the data card is convenient to carry and easy to use, and has a low cost; on the other hand, a uniform NDIS driver is used as a uniform data transmission channel and medium, thereby greatly reducing the software development cost and maintenance cost.

### Brief Description of Drawings

FIG. 1 is a structure diagram of a wireless broadband data card supporting accessing a network in 3G and Wi-Fi modes according to an embodiment of the present document;
FIG. 2 is a basic work flow chart of a wireless broadband data card supporting accessing a network in 3G and Wi-Fi modes according to an embodiment of the present document;
FIG. 3 is a flow chart of switching a data card between two modes, 3G access and Wi-Fi access, according to an embodiment of the present document.

### Preferred Embodiments of the Invention

In order to make the objective, technical scheme and advantage of the present document much more clear and obvious, the embodiment of the present document is described in detail with reference to the accompanying drawings hereinafter. It should be illustrated that, in the case of not conflicting, the embodiments in the present application and features in these embodiments can be combined with each other. And all those combinations are in the protection scope of the present document.

The design objective of the Microsoft network driver interface specification (NDIS) is to enable the users to visit different protocols through removing different protocols from the network interface card. In the design process, the protocol does not need to understand any information about the network interface card.

Therefore, the present embodiment provides a data card implementation scheme based on the NDIS, wherein, the data card enumerates the NDIS devices on the computer connected with it through the USB driver on the present card, and the present card is virtualized to be a network interface card as the channel and media of the data transmission, to finish the data interaction of the users and the network side (including 3G wireless wide area communication network and Wi-Fi) and support the 3G wireless wide area communication network and Wi-Fi access.

The wireless data card system provided by the embodiment of the present document supports the 3G (especially the TD-SCDMA network of China Mobile) and Wi-Fi access, and supports finishing the access authorization of China Mobile Wi-Fi hotspot automatically through the subscriber identity module (SIM) / universal subscriber identity module (USIM) card.

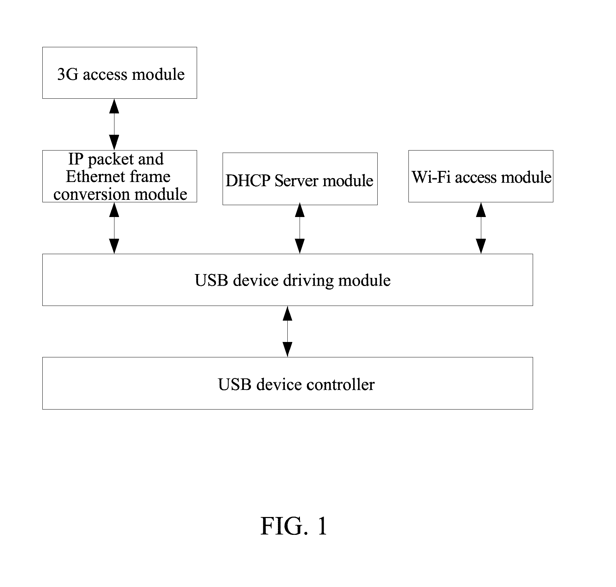

As shown in FIG. 1, the wireless broadband data card supporting accessing a network in 3G and Wi-Fi modes includes: a USB device controller, a USB device driving module, a Wi-Fi access module, a 3G access module, a IP packet and Ethernet frame conversion module and a dynamic host configuration protocol (DHCP) server module, wherein: the wireless broadband data card is connected with a PC machine through a USB interface, and is able to realize accessing a network in 3G and Wi-Fi modes through installing a NDIS device driver on the PC side and cooperating with the USB device driver on the present data card side.
the USB device controller is configured to: perform data transmission with a terminal (such as a PC) connected with the present data card; wherein, a user command received by the USB device controller is transmitted in an Attention (AT) way;
the USB device driving module is configured to: enumerate a NDIS device and more than one virtual serial port on a PC side through the USB by the data card, wherein, the enumerated NDIS device is shown as a network card device to the user and the virtual serial ports can be used for interaction between the user and the data card; and activate the DHCP server module after accessing a 3G data network or a WI-Fi connection successfully; and send uplink Ethernet frames sent by the USB device controller correspondingly to the IP packet and Ethernet frame conversion module or the Wi-Fi access module according to a connection mode selected by a user and sent by the USB device controller; and send downlink Ethernet frames sent by the IP packet and Ethernet frame conversion module or the Wi-Fi access module to the USB device controller;
the IP packet and Ethernet frame conversion module is configured to: parse out an IP data packet from the received uplink Ethernet frames sent by the USB device driving module, and then send to the 3G access module; and encapsulate the received IP data packets sent by the 3G access module as an Ethernet frame, and then send to the USB device driving module;
the 3G access module is configured to: send the IP data packets sent by the IP packet and Ethernet frame conversion module out according to a 3G protocol, and process the data packets received from a network side and send to the IP packet and Ethernet frame conversion module;
the DHCP Server module is configured to: assign an IP address for the PC side after activation; and the assigned IP address comes from an address obtained from the network side after a packet data protocol (PDP) is activated;
the Wi-Fi access module is configured to: perform a medium access control (MAC) conversion and transmission of the data packet between the network side and the USB device driving module. Wherein, the Wi-Fi access module includes an Ethernet bridge unit, and the unit connects the Wi-Fi network and the present data card to be an identical network in a MAC layer. The whole data card works in the MAC layer, and performs no processing on IP layer data carried by it but transmits directly. Through the Ethernet bridge, the PC machine and the Wi-Fi network can be connected together in the MAC layer.

In addition, the above-mentioned wireless broadband data card further can include an authorization module and a SIM card driving module, wherein:
the authentication module is configured to: store user authorization result information, store a user name and password, and finish an access authorization automatically according to user configuration;
the SIM card driving module is configured to: provide reading of SIM information.

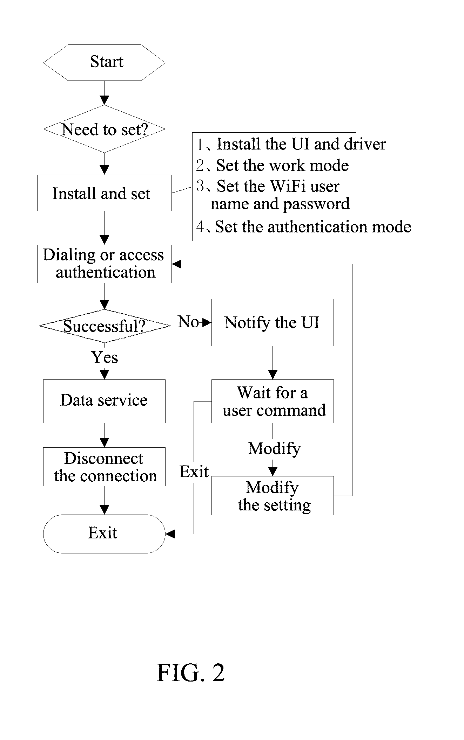

FIG. 2 is a basic work flow chart of a wireless broadband data card supporting accessing a network in 3G and Wi-Fi modes according to an embodiment of the present document. As shown in FIG. 2, a default configuration is stored in the data card, including a default network access way, Wi-Fi on-off state, automatic or manual Wi-Fi connection etc. First of all, the user sets the data card through the user interface (UI) at the computer side, such as setting the Wi-Fi user name and password, etc. After finishing setting, the data card works according to the user setting. If it is set as the Wi-Fi automatic access way, and if there is an available CMCC Wi-Fi hotspot at present, the data card initiates the authentication to the server automatically; if the authorization is successful, then the authorization result is stored in the data card; if the authorization is failed, then the authorization result prompt is given to the user, waiting for the next command of the user. If the authorization is successful at the first time, then the data card performs the authorization automatically by using the user name and password stored in the data card according to the previous authentication result when accessing the Wi-Fi network next time, and the automatic authorization can be completed without needing the user intervention at that moment. The user UI at the computer side is resident when the data card works, its main function is to feed back the changing of the network working condition to the user, for example, the user is given the prompt of whether accessing the network is successful or failed, whether authentication is successful or failed, connecting or disconnecting, etc.

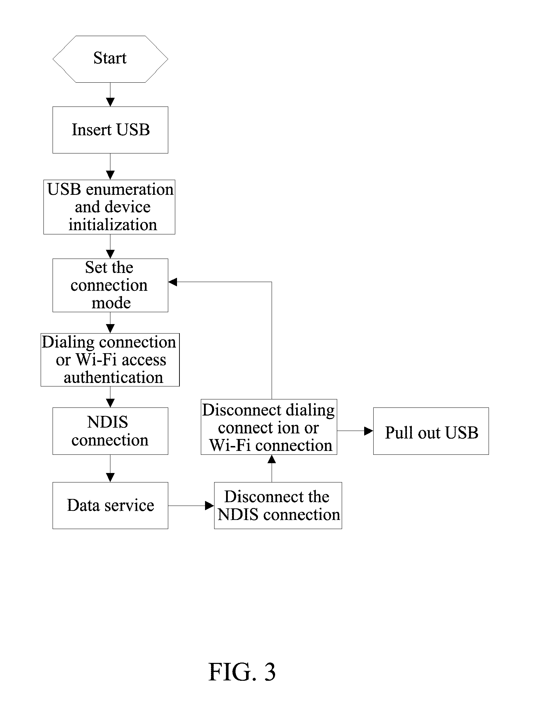

FIG. 3 is a flow chart of switching a data card between two modes, 3G access and Wi-Fi access, according to an embodiment of the present document. As shown in FIG. 3, after the data card is inserted into the computer through the USB interface, the data card is powered on and begins to work, and the data card begins to enumerate the USB device. Under the normal operation condition of the data card, a NDIS interface will be enumerated on the computer, more than one virtual serial port (such as three) used for managing and setting the data card. After the USB enumeration and device initialization are finished, the PC can send the AT command to the data card through three serial ports, which is used for the functions such as connecting and disconnecting the data of the data card, interlinking and disconnecting the NDIS, etc. The data card is in a disconnecting state after the initialization is finished. If the data connection is required to be performed, a particular AT command is required to be sent to the data card device through the virtual serial ports first, the connection mode is set, that is, selecting one of the 3G wireless wide area communication network or the Wi-Fi interlinkage. Later, according to the selected connection mode, if it is the 3G wireless wide area communication network, then the work, such as, activating the PDP, etc., is performed; and the NDIS interlinkage speed rate and connecting state are set after success; and then the data service can be performed. If the Wi-Fi connection mode is selected, then the hotspot is required to be scanned first, the access authorization is performed according to the hotspot selected by the user; similarly, the NDIS interlinkage speed rate and connecting state are set after authorization is successful; and then the data service can be performed. If the user needs to switch between the 3G wireless wide area communication network and the Wi-Fi, the user needs to disconnect the NDIS interlinkage at first, then disconnect the current data connection, that is, disconnect the 3G data connection or the Wi-Fi interlinkage, then set the connection mode according to the above-mentioned way, and then connect again by means of performing the data connection, which can realize the switching.

In a word, the original access mode of the 3G wireless data card is to use the USB virtual serial port driver to enumerate several virtual serial ports and several Modem devices on the computer to perform dialing and data transmission, and every manufacturer has their own data transmission protocols for the access mode of the WiFi wireless network card, which are not uniform, and the representation is to enumerate the virtual network card on the computer, which is similar with the NDIS. The above-mentioned technical scheme uses the NDIS protocol and driver to unify the two access modes, 3G and WiFi, and the external interface form of the data card is the virtual serial port and the NDIS device, so the difference of the access type can be hidden for the UI.

It can be understood by those skilled in the art that all or part of steps in the above-mentioned method can be fulfilled by programs instructing the relevant hardware components, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module. The present document is not limit to any specific form of the combination of the hardware and software.

The above description is only the preferred embodiments of the present document and is not intended to limit the protection scope of the present document. The present document can have a variety of other embodiments according to the content of the invention. Those skilled in the art can make various corresponding modifications and changes according to the present document without departing from the spirit and essence of the present document. All of modifications, equivalents and/or improvements without departing from the spirit and essence of the present document should be embodied in the scope of the appended claims of the present document.

### Industrial Applicability

By adopting the above-mentioned technical scheme, the 3G access function and the Wi-Fi access function are integrated in one data card; on the one hand, the data card is convenient to carry and easy to use, and has a low cost; on the other hand, a uniform NDIS driver is used as a uniform data transmission channel and medium, thereby greatly reducing the software development cost and maintenance cost. Therefore, the present document has very strong industrial applicability.

## Claims

1. A wireless broadband data card which supports accessing a network in 3G and Wi-Fi modes, wherein, the wireless broadband data card is connected to a terminal through a USB interface, and the wireless broadband data card comprises:
a USB device controller, a USB device driving module, an IP packet and Ethernet frame conversion module, a 3G access module, a dynamic host configuration protocol (DHCP) server (DHCP server module), and a Wi-Fi access module, wherein:
the USB device controller is configured to: perform data transmission with a terminal connected with a present data card;
the USB device driving module is configured to: enumerate a network driver interface specification (NDIS) device and more than one virtual serial port on a PC side through the USB interface by the data card; and activate the DHCP server module after accessing a 3G data network or a WI-Fi connection successfully; and send uplink Ethernet frames sent by the USB device controller correspondingly to the IP packet and Ethernet frame conversion module or the Wi-Fi access module according to a connection mode selected by a user and sent by the USB device controller; and send downlink Ethernet frames sent by the IP packet and Ethernet frame conversion module or the Wi-Fi access module to the USB device controller;
the IP packet and Ethernet frame conversion module is configured to: parse out IP data packets from received uplink Ethernet frames sent by the USB device driving module, to send to the 3G access module; and encapsulate received IP data packets sent by the 3G access module as Ethernet frames, to send to the USB device driving module;
the 3G access module is configured to: send the IP data packets sent by the IP packet and Ethernet frame conversion module out according to a 3G protocol, and process data packets received from a network side to send to the IP packet and Ethernet frame conversion module;
the DHCP Server module is configured to: assign an IP address for the terminal after activation; and
the Wi-Fi access module is configured to: perform medium access control (MAC) conversion and transmission of the data packets between the network side and the USB device driving module.

2. The wireless broadband data card according to claim 1, wherein:
the IP address assigned for the PC by the DHCP Server module comes from an address obtained from the network side after a packet data protocol (PDP) is activated.

3. The wireless broadband data card according to claim 1, wherein:
a user command received by the USB device controller is transmitted in an Attention (AT) way.

4. The wireless broadband data card according to claim 1, further comprising an authorization module, wherein:
the authentication module is configured to: store user authorization result information, a user name and a password, and finish an access authorization automatically according to user configuration.

5. The wireless broadband data card according to claim 1 or 4, further comprising a subscriber identity module (SIM) card driving module, wherein:
the subscriber identity module (SIM) card driving module is configured to: provide reading of SIM information.

6. The wireless broadband data card according to claim 1, wherein: the Wi-Fi access module comprises an Ethernet bridge unit, wherein:
the Ethernet bridge unit is configured to: connect the Wi-Fi network and the present data card to be an identical network in a MAC layer.

7. An access switching method, comprising: establishing a 3G data connection or a WiFi access firstly when the data card described in any one of claims 1-6 establishes a connection, and then establishing a network driver interface specification (NDIS) connection; while disconnecting the NDIS connection first when disconnecting, and then disconnecting the 3G data connection or the WiFi access.
